Europäisches Patentamt

European Patent Office

Office européen des brevets

(19)

(11) Publication number: 0 235 914
A2

# (12) EUROPEAN PATENT APPLICATION

(21) Application number: 87300650.6

(22) Date of filing: 27.01.87

(51) Int. Cl.⁴: C09D 3/80 , C08F 265/00

(30) Priority: 31.01.86 GB 8602402

(43) Date of publication of application:
09.09.87 Bulletin 87/37

(84) Designated Contracting States:
AT BE CH DE ES FR GB GR IT LI NL SE

(71) Applicant: Sericol Group Limited
24 Parsons Green Lane
London SW6 4HT(GB)

(72) Inventor: Smith, Jonathan Harper
48 Perryn Road
London W3(GB)
Inventor: Summers, Geoffrey Gordon
420 Selsdon Road
South Croydon Surrey(GB)

(74) Representative: Claisse, John Anthony, Dr.
11 Evelyn Avenue
Ruislip Middlesex, HA4 8AR(GB)

## (54) Coating compositions.

(57) This invention concerns the production of textured surfaces, and in particular to compositions for producing such surfaces. The compositions include a radiation-curable component, an adhesion promoter for promoting adhesion to a substrate, and a texture-modifying amount of microspheres substantially homogeneously dispersed therein. The microspheres can be of glass, ceramic or polymeric materials, and they can be solid or hollow. Various adhesion promoters can be used, and in general the choice will depend upon the curable system used. For example, certain polymers, monomers or unreactive volatile solvents can be used as adhesion promoters with free-radical curable compositions. Texturing can be effected on the surface of a variety of materials, for example on plastics or cellulosic substrates.

EP 0 235 914 A2

The invention concerns the production of textured surfaces, for example on plastics or cellulosic materials.

Film grades of polycarbonates are known which have a textured surface. These films have found widespread use in various industries, for example for the production of nameplates, fascia panels in the automotive industry, and membrane switches in the electronics industry. There are various reasons for the use of such surfaces, for example to provide low reflectivity and avoid unwanted glare, to aid the scattering of light on rear illumination, or to provide a tactile finish which is pleasing to the touch.

A major requirement for membrane switches is the provision of areas on the switch membrane which are transparent to light from indicator lights or LED (light emitting diode) displays behind the membrane so that they can be seen. In many cases these transparent areas or 'windows' are coloured using strong but extremely transparent inks to provide visual effects. Where LCD (liquid crystal display) devices are used, which do not have an inherent light source of their own, an extremely clear window is essential to allow the display to be seen.

If a textured plastics material is used in the production of these switches, the translucent areas tend to scatter light, which may be of benefit in some applications, but it is a disadvantage where 'windows' are required.

The following are amongst the methods which have been proposed to provide transparent windows where textured plastics materials are used:-

(a) die cutting the window areas and adhering a clear plastic material over the resultant spaces;

(b) adhering a clear plastics material over the areas where windows are required; or

(c) printing a clear varnish over the areas where windows are required.

The first of these methods tends to weaken the plastics material, and the first and second methods both lead to a non-smooth surface as the window areas are at a different level from the rest of the diaphragm. Both are also costly and time consuming to produce. The third method suffers from the disadvantage that the window produced is not as clear as the plastics material itself and so it does not always meet customer requirements.

In order to overcome these disadvantages it is possible to effect selective texturing by screen printing a special varnish on to a completely clear plastics material. A textured finish with scuff/scratch and chemical resistance can be produced using a special ultra violet curable varnish and using a special process including:-

(a) primary curing using a low power UV lamp, and

(b) a final through cure using a high power UV lamp in an inert atmosphere e.g. nitrogen, the latter preventing inhibition of photo-polymerisation of the varnish by oxygen.

The coatings obtained with this prior art method have a selectively textured finish with satisfactory surface hardness and resistance to abrasion and chemical attack. However, it involves substantial equipment and running costs which have meant that the method is available to only a relatively few users.

According to the present invention there is provided a coating composition for producing a texture finish onto a substrate, the composition comprising an adhesion promotor for promoting adhesion to the substrate, a radiation-curable component and a texture modifying amount of microspheres substantially homogeneously dispersed therein. The microspheres can be glass and/or ceramic and/or polymeric materials.

The present invention provides coating compositions which can be radiation-cured to provide a textured finish which is of low gloss, has high surface hardness, has resistance to abrasion and chemical attack possibly greater than the substrate onto which it is coated, and which has a pleasing tactile finish. The radiation curable component is preferably of a type that can be cured in the presence of atmospheric oxygen and thus can avoid the expensive prior art apparatus.

The use of an adhesion-promotor is of particular advantage with plastic substrates, for example polycarbonate or polyesters. Adhesion can be promoted by various materials for example monomers, polymers, oligomers or solvents.

The incorporation of fine glass, ceramic or polymeric solid beads or hollow spheres into a suitable radiation-curable component which, on curing, sets to form a matrix holding the beads or spheres on the substrate, enables a textured appearance to be provided and an abrasion resistance comparable to the prior art method mentioned earlier.

Curing, which occurs by polymerisation, can be effected using conventional radiation-curing techniques, preferably using ultra-violet or electron beam radiation, and the curing mechanism may take place either by free-radical or cationic polymerisation or by a combination of the two processes.

The compositions of the invention can contain volatile, non-reactive diluents such as water and/or organic solvent(s).

In the case of free-radical curable compositions they will in general contain:-

(i) One or more reactive oligomers and/or one or more mono or multi-functional unsaturated monomers,

(ii) One or more photoinitiators and/or photochemical cross-linking agents.

Examples of adhesion promotors which can be used with free-radical curable compositions are:-

a) Unreactive polymers, e.g. halogenated polyesters or polyolefin polymers,

b) Monomers, e.g. N-vinyl pyrrolidone monomer, surfactant acrylate or hexane -1,6-diol diacrylate,

c) Unreactive volatile solvents, e.g. aliphatic ketones or esters or aromatic hydrocarbons.

Compositions curable by cationic mechanism can include epoxy resins, typically cyclo-aliphatic epoxides, and/or unsaturated vinyl ether polymers, copolymers or oligomers which are cross-linked with photochemically reactive compounds well known in the art which are usually Lewis acid releasing chemicals.

Compositions according to the invention can also include the following:-

a) Natural or synthetic waxes or silicone-based components to improve mar-resistance and slip. Waxes can also contribute to the gloss-reduction of the cured composition.

b) Silicone and non-silicone flow aids for improving the lay of the composition.

c) Mineral powders to adjust the gloss level of the cured composition, for example:-

(i) finely divided silicon dioxide

(ii) barium sulphate

(iii) calcium carbonate

(iv) hydrous magnesium silicate

d) Tertiary amines or amine acrylates to overcome the effect of oxygen inhibition and also act as photo-accelerators with suitable photoinitiator, (N-methyl-N,N-diethanolamine or Lankro Photomer 4182).

e) Inhibitor/stabilizer to prevent premature polymerisation.

Where the spheres are composed of glass or ceramic it can be advantageous if they have been surface-treated either during or after manufacture with a coupling agent, e.g. silane or zirconium complex, or acid etching to prevent separation of the beads from the surrounding polymer when shear forces, such as scratching, are applied to the cured coating. The weight average particle size of the microspheres is preferably up to 120 microns and more particularly from 15 microns to 60 microns and advantageously about 30 microns. Since solid microspheres can be used, there is no maximum wall thickness for hollow micropsheres, but a wall thickness of 0.5 to 2 microns is preferred.

The amount of microspheres in the composition should be sufficient to provide the required surface effect for the cured coating. In general, amounts of from 2 to 60% by weight will be used, usually dependant on the specific gravity of the microspheres. Typically from 2 to 10 weight percent of low specific gravity ingredients, such as polymeric or hollow glass microspheres, or from 10 to 60 weight percent of heavier ingredients such as solid glass or ceramic microspheres will be used. Mixtures of the various types of microspheres may advantageously be used and the level of addition will be governed by the composite specific gravity of the mixture.

Coating of the substrates to be textured can be by conventional coating techniques, e.g. using a meyer bar, or roller coating or jet spraying where overall texturing is desired or by printing where selective texturing is required using processes such as screen printing.

When screen printing is the preferred method, the mesh used to print with the composition will obviously have to be varied with the diameter of the microspheres used, and typically it will range from 34 to 43 threads/cm mesh for the coarsest, 120 micron microspheres, to 120 threads/cm for the finest microspheres.

Various substrates can be given a textured finish using a composition of the invention, it being in general the components of the composition other than the microspheres that determine the substrate to which the composition will adhere. Thus plastics such as polyesters, polycarbonates, polyvinyl chloride, polyethene and polypropene can be textured, in addition to papers or boards.

The following Examples are given by way of illustration only. All parts are by weight unless stated otherwise.

Example 1

Urethane acrylate oligomer 45.0 parts
Hydrous magnesium silicate 15.0 parts
1,6-Hexanediol diacrylate 29.0 parts
Benzophenone 3.5 parts
Silicone flow agent 1.0 part
p-Methoxyphenol 0.5 part
The components are mixed under high speed shear and then the following are added under low speed shear:-
Hollow glass microspheres (glass bubbles E22X -3M Co.Ltd.-average diameter 30 micron, wall thickness 0.5-2.0 micron) (6.0 parts)
The resulting composition is screen printed through a monofilament polyester mesh of 90 threads/cm using a semi-automatic screen printing press to the following substrates:-
    (a) a clear, untextured grade of polycarbonate 1mm thick, and
    (b) a clear top-coated polyester 175 micron thick.
Curing of the composition was accomplished with a UV radiation unit using two 80 watt/cm , UV lamps. The cure speed can be increased or decreased according to the number of lamps used.

|                      | UV Lamp     | 2 UV Lamps    |
|----------------------|-------------|---------------|
|                      | 80 W/cm     | 80 W/cm each  |
| Cure speed (m/min)   | 12          | 6             |

A textured finish with the previously stated properties is obtained when the above composition is suitably printed and cured.

Example 2

Epoxy acrylate oligomer 27.9 parts
Trimethylol propane triacrylate 14.1 parts
Hydrous magnesium silicate 14.1 parts
Acetophenone 1.8 parts
p-Methoxyphenol 0.3 parts
Benzophenone 1.8 parts
The components are mixed under high shear and then the following are added under low speed shear conditions:-
Solid glass microspheres (Spheriglass 3000 CP03 -Potters Ballotini -weight average particle size 60 microns) 40 parts
This composition is roller coated and cured in a similar manner to that described in Example 1, but the components other than the microspheres make it suitable for paper and board substrates, particularly Art papers to which it imparts a textured finish giving, for example advertising labels, a pleasant tactile feel.

Example 3

Tripropylene glycol diacrylate 46.7 parts
Methyl/butyl methacrylate copolymer (Paraloid B66 ex Rohm and Haas) 25.7 parts
Isopropylthioxanthone 1.7 parts
Dimethoxyphenyl acetophenone 4.2 parts
N-vinyl-2-pyrrolidone 13.0 parts
N-methyl-N,N-diethanolamine 0.9 parts
Silicone flow aid 1.8 parts

The above components are blended to form a radiation-curable varnish composition and then the following are added with low shear stirring:-

Polymeric Spheres (Lanco wax A1610 ex Capricorn Chemicals Ltd Weight average particle size 30 microns) 6.0 parts

This composition is screen printed on to various clear, rigid PVC substrates, e.g. Cobex, under similar conditions to those used in Example 1 to give a selectively textured surface.

Example 4

Acrylic copolymer emulsion (UCB IRR34) 88.0 parts
Tripropylene glycol diacrylate 5.0 parts
Benzophenone 2.0 parts
(1-Hydroxy-cyclohexyl)phenyl ketone 2.0 parts

The above are blended and stirred vigorously until homogeneous. The following hollow glass beads of 30 microns average particle size are then added under low shear conditions:-
Glass bubbles (E22X -Example 1) 3.0 parts

The printing and curing conditions for this composition are the same as in Example 1 although a hot air drier can be used with advantage in conjunction with radiation curing.

Example 5

Vinyl resin (Union Carbide VAGD) 45.0 parts
Cycloaliphatic epoxy resin (Ciba Geigy -Araldite CY179) 25.0 parts
Cationic photosensitiser(3M FC510) 5.0 parts
Cationic initiator(3M FC508) 5.0 parts
Flow aids 5.0 parts
Cyclohexanone 10.0 parts

The above are blended until homogeneous. The following is then added with low shear stirring:-
Polymeric microspheres (Lanco Wax A1611) 5.0 parts

The printing and curing conditions for this composition are the same as Example 1 except the mesh count is 77 threads/cm.

**Claims**

1) A coating composition for producing a textured finish on a substrate, the composition comprising a radiation-curable component, an adhesion promotor for promoting adhesion to the substrate, and a texture modifying amount of microspheres substantially homogeneously dispersed therein.

2) A composition as claimed in Claim 1, wherein the microspheres are composed of glass and/or ceramic and/or polymeric materials.

3) A composition as claimed in either of the preceding claims, wherein the microspheres are present in an amount from 2 to 60 weight percent.

4) A composition as claimed in any of the preceding claims, wherein the microspheres have a weight average particle size of less than 120 microns.

5) A composition as claimed in any of the preceding claims wherein the radiation-curable component is curable by ultra-violet light.

6) A composition as claimed in claim 1 to 5 wherein the radiation-curable component is curable by electron-beam.

7) A composition as claimed in either of claims 5 and 6 wherein the radiation curable component is curable by a free-radical mechanism.

8) A composition as claimed in any of claims 1 to 5 wherein the radiation curable component is curable by cationic polymerisation.

9) A composition as claimed in any of the preceding claims wherein the adhesion promotor promotes adhesion to plastic substrates.

10) A composition as claimed in any of the claims 1 to 7, wherein the adhesion promotor is an acrylate monomer.

11) A composition as claimed in any of claims 1 to 7, wherein the adhesion promotor is N-vinylpyrrolidone.